Europäisches Patentamt

European Patent Office

Office européen des brevets

(19)

(11) Numéro de publication : **0 014 614 B1**

# FASCICULE DE BREVET EUROPÉEN

(45) Date de publication du fascicule du brevet :
**13.06.84**

(21) Numéro de dépôt : **80400089.1**

(22) Date de dépôt : **21.01.80**

(51) Int. Cl.³ : **F 16 L 25/00, F 16 L 29/00**

(54) **Dispositif démontable pour insérer un appareil entre deux canalisations.**

(30) Priorité : **02.02.79 FR 7902754**

(43) Date de publication de la demande :
**20.08.80 Bulletin 80/17**

(45) Mention de la délivrance du brevet :
**13.06.84 Bulletin 84/24**

(84) Etats contractants désignés :
**BE DE GB SE**

(56) Documents cités :
**FR-A- 1 457 640
FR-A- 2 159 236
GB-A- 564 527
GB-A- 1 081 750
US-A- 2 726 683
US-A- 3 997 957**

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Langevin, Bernard
2, rue Alphonse Daudet
F-50120 Equeurdreville (FR)**

(74) Mandataire : **Mongrédien, André et al
c/o BREVATOME 25, rue de Ponthieu
F-75008 Paris (FR)**

## Description

L'invention concerne un dispositif démontable prévu pour permettre le montage d'un appareil tel qu'une vanne entre les extrémités en vis-à-vis de deux canalisations.

Pour monter entre deux canalisations un appareil tel qu'une vanne, il est connu d'utiliser des brides qui sont généralement fixées par soudure à chacune des extrémités des canalisations. Le montage de la vanne s'effectue alors au moyen de lacets, c'est-à-dire de tirants traversant des trous de fixation alignés, formés dans les brides par rapprochement des brides et des canalisations. Etant donné que l'écartement des brides avant le serrage des lacets peut être plus ou moins important, la contrainte engendrée dans les canalisations et dans leurs supports varie avec cet écartement et peut atteindre des niveaux très élevés lorsqu'il dépasse un certain seuil. En outre, lorsque l'accès aux canalisations est difficile, par exemple lorsqu'elles sont disposées à l'intérieur d'une enceinte ou derrière une paroi, l'orifice d'accès ménagé dans cette paroi ou dans cette enceinte peut se trouver décalé par rapport au dispositif de raccordement. Il en résulte alors des difficultés de montage et de démontage du dispositif et de la vanne avec laquelle il est associé, auxquelles s'ajoutent des problèmes d'accès à la commande de la vanne. Ces difficultés deviennent insurmontables lorsqu'il s'agit de changer une vanne à distance.

Un autre dispositif démontable connu comprend des raccords vissés constitués par un écrou ou par un embout fileté monté tournant sur l'extrémité de chacune des tuyauteries, ces raccords étant adaptés pour venir se visser sur des embouts filetés correspondants formés sur un appareil, tel qu'une vanne, prévu pour être monté entre les extrémités en vis-à-vis des canalisations. Ce dispositif présente des inconvénients comparables à ceux du dispositif à lacets. Ainsi, il a également pour effet de rapprocher les extrémités des canalisations. En outre, ce dispositif est pratiquement inutilisable lorsque les canalisations sont à peu près inaccessibles.

Les deux dispositifs connus qui viennent d'être mentionnés ne peuvent pas être disposés à proximité immédiate d'une paroi rigide telle qu'un mur de béton, en raison de l'espace qui doit être ménagé pour permettre d'effectuer le montage et le démontage du dispositif à l'aide d'un outil. Enfin, le parallélisme des plans de joint définis par les brides doit être obtenu en fin de serrage, quelles que soient les formes des canalisations et la complexité du réseau qu'elles constituent.

Par ailleurs, on connaît du document FR-A-1 457 640 un dispositif de raccordement de conduites comportant un coin mobile selon une direction radiale.

L'invention a pour objet un dispositif démontable, prévu pour insérer un appareil tel qu'une vanne entre les extrémités en vis-à-vis de deux canalisations, permettant de résoudre les inconvénients des dispositifs connus précédemment mentionnés, dont la conception est relativement simple et dont le montage et le démontage peuvent être effectués facilement même à distance dans le cas où les canalisations ne sont pas directement accessibles.

Dans ce but et selon l'invention, un dispositif démontable prévu pour insérer un appareil entre les extrémités en vis-à-vis de deux canalisations définissant un axe commun, comprenant deux brides susceptibles d'être fixées de façon étanche auxdites extrémités, est caractérisé en ce qu'il comprend de plus un organe extensible le long dudit axe et constituant un sous-ensemble unitaire supportant ledit appareil, ledit organe extensible étant normalement allongé entre les brides selon l'axe des canalisations, afin de venir en appui étanche contre ces brides et de permettre une communication entre lesdites canalisations au travers d'un passage ménagé dans ledit organe extensible le long de l'axe des canalisations, ledit organe extensible pouvant être rétracté selon l'axe des canalisations pour permettre le montage et le démontage de l'appareil porté par ledit sous-ensemble unitaire.

Selon un mode de réalisation particulier de l'invention l'organe extensible comporte deux parties tubulaires mobiles selon l'axe des canalisations et dont l'une porte ledit appareil, un coin mobile selon une direction transversale par rapport à l'axe des canalisations sous l'action de moyens de commande, et coopérant avec une rampe ménagée sur l'une au moins desdites parties tubulaires pour déplacer ces dernières selon l'axe des canalisations et une pièce de liaison supportant le coin par l'intermédiaire des moyens de commande et supportant les parties tubulaires par l'intermédiaire de moyens de support autorisant un déplacement desdites parties parallèlement à l'axe des canalisations.

Dans une variante de ce mode de réalisation particulier, le déplacement du coin est commandé par une tige filetée dont une extrémité est associée en translation avec le coin, la tige filetée étant vissée dans la pièce de liaison. De préférence, l'autre extrémité de la tige filetée comporte alors une tête de manœuvre sur laquelle s'adapte un organe de commande traversant une ouverture formée dans une paroi par l'intermédiaire d'au moins deux bouchons, un premier desdits bouchons étant reçu de façon tournante dans ladite ouverture alors que le second bouchon est reçu de façon tournante dans un trou excentré formé dans le premier bouchon et que l'organe de commande est reçu de façon tournante dans un trou excentré formé dans le second bouchon. Une telle caractéristique permet de contrôler à distance le montage et le démontage du dispositif de raccordement à l'aide d'une commande rigide. En effet, les deux bouchons emboîtés l'un dans l'autre sont munis de trous excentrés qui permettent de compenser un éventuel décalage entre l'axe de l'ouverture formée dans la paroi et l'axe de la tige filetée permettant de manœuvrer le coin. L'ouverture peut alors être formée dans un troisième bouchon sur lequel est fixée la pièce de liaison, les dimensions de l'ouverture permettant le passage de l'organe tubulaire extensible. Ces caractéristiques permettent de monter le dispositif selon l'invention à proximité immédiate d'une paroi rigide telle qu'un mur de béton ou dans une enceinte fermée et isolée.

Lorsque le fonctionnement du dispositif est contrôlé par un organe de commande traversant une ouverture formée dans une paroi par l'intermédiaire de deux bouchons emboîtés l'un dans l'autre et percés chacun d'un trou excentré, l'appareil peut être constitué par une vanne comprenant une tête de manœuvre sur laquelle s'adapte l'organe de manœuvre après rotation des premier et second bouchons.

Conformément à une caractéristique secondaire de l'invention, des joints d'étanchéité annulaires sont disposés aux extrémités des parties tubulaires susceptibles de coopérer avec les brides et entre le coin et lesdites parties tubulaires.

Conformément à encore une autre caractéristique de l'invention, ledit appareil est monté de façon étanche entre deux éléments constituant la partie tubulaire correspondante au moyen d'entretoises reliant lesdits éléments.

Conformément à une autre caractéristique secondaire de l'invention, des entretoises relient les brides de façon rigide, ce qui permet d'obtenir un parallélisme correct entre les deux faces des brides en vis-à-vis ainsi qu'un bon alignement des deux canalisations et un contrôle de la distance séparant lesdites faces.

Conformément à encore une autre caractéristique secondaire de l'invention, des moyens de guidage, constitués par exemple par d'autres entretoises, sont disposés entre les brides pour définir avec elles un berceau recevant l'organe tubulaire extensible ainsi que la vanne associée à cet organe. Cette caractéristique permet d'assurer un positionnement et notamment un centrage correct de l'organe tubulaire extensible même lorsque les difficultés d'accès aux canalisations conduisent à effectuer le montage du dispositif en aveugle, c'est-à-dire sans qu'aucun contrôle visuel de ce positionnement ne puisse être effectué.

On décrira maintenant, à titre d'exemple non limitatif, deux modes de réalisation particuliers de l'invention en se référant aux dessins annexés dans lesquels :

la figure 1 est une vue de côté, en coupe partielle, d'un dispositif démontable assurant la mise en place d'une vanne entre les extrémités en vis-à-vis de deux canalisations, ce dispositif incorporant un système de commande à distance traversant une ouverture ménagée dans une paroi derrière laquelle se trouvent les canalisations ;

la figure 2 est une vue en coupe longitudinale d'une partie du dispositif démontable représenté sur la figure 1 ; et

la figure 3 est une vue en coupe de ce dispositif selon la ligne 3-3 de la figure 2.

Le dispositif démontable représenté sur les figures est prévu pour être disposé entre les extrémités axialement alignées 10 et 12 de deux canalisations de même diamètre à l'intérieur desquelles circule un fluide quelconque.

Le dispositif selon l'invention comprend essentiellement deux brides 14 et 16 et des moyens de serrage comprenant un organe tubulaire extensible désigné par la référence générale 18 et prenant appui sur les brides 14 et 16 pour raccorder celles-ci de façon étanche. Les brides 14 et 16 sont identiques et elles sont fixées respectivement aux extrémités 10 et 12 des canalisations par tout moyen approprié tel que, notamment, par des soudures 20 et 22 respectivement. Les brides 14 et 16 définissent des surfaces en vis-à-vis 24 et 26 entre lesquelles est disposé l'organe tubulaire extensible 18.

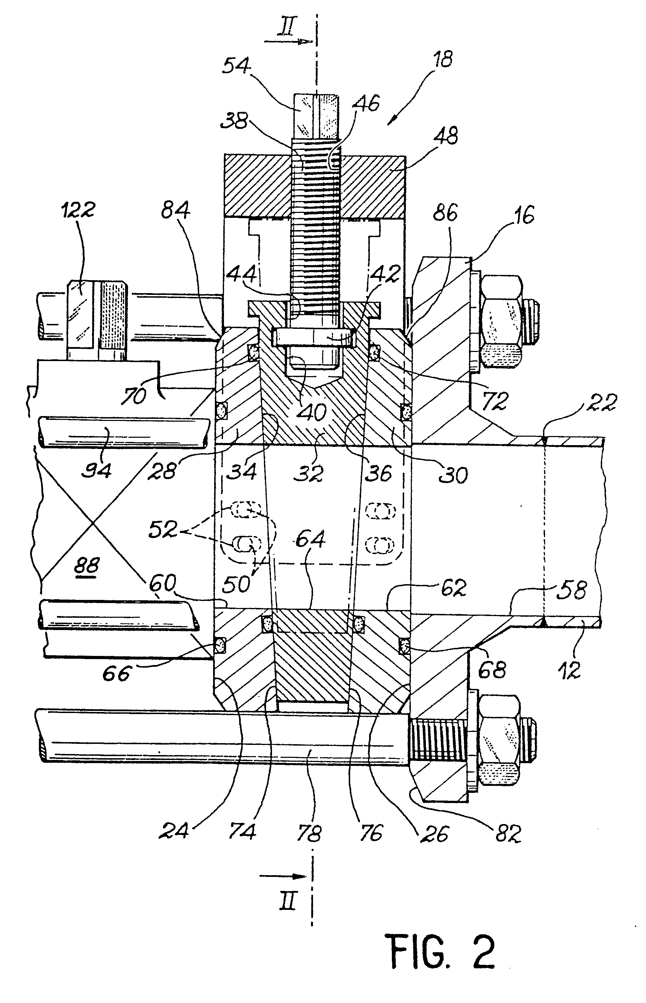

Comme l'illustre la figure 2, l'organe tubulaire extensible 18 comprend deux parties tubulaires 28 et 30 et des moyens d'écartement constitués dans le mode de réalisation représenté par un coin 32.

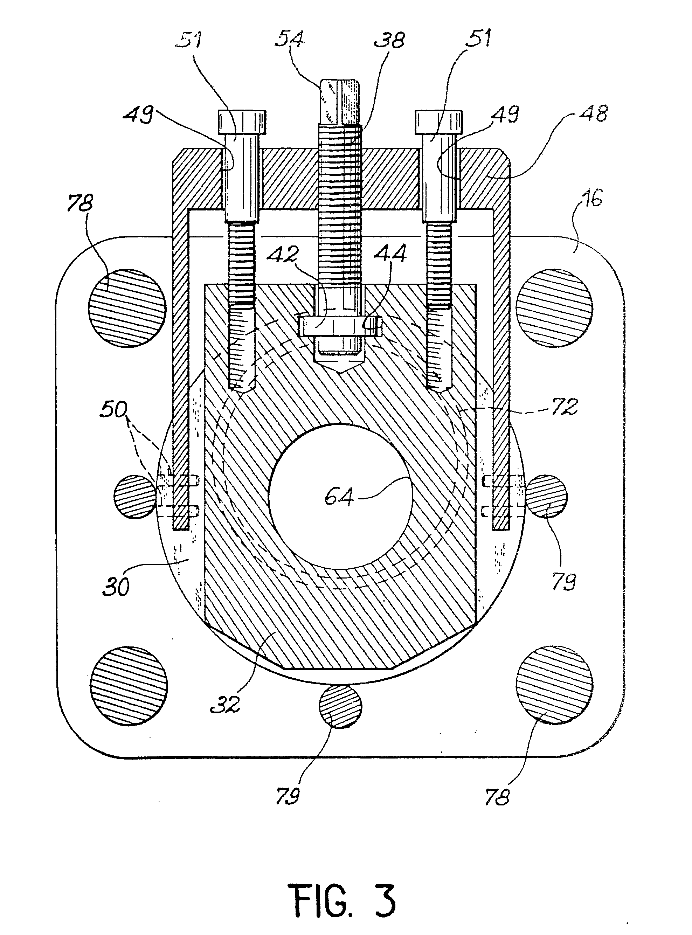

Le coin 32 est disposé entre les parties tubulaires 28 et 30 et il est susceptible de se déplacer transversalement par rapport à l'axe défini par les extrémités 10 et 12 des canalisations de façon à solliciter les parties tubulaires 28 et 30 en éloignement l'une de l'autre par suite de la coopération du coin 32 avec des rampes inclinées 34 et 36 formées respectivement sur chacune de ces parties. Le déplacement transversal du coin 32 est commandé par une tige filetée 38 dont l'une des extrémités comporte une collerette 42 reçue de façon tournante dans une gorge 44 définie dans un perçage borgne 40 formé dans le coin 32. La tige filetée 38 est vissée dans un trou taraudé 46 formé dans un organe support en forme d'étrier 48 qui s'étend de part et d'autre du coin 32 et des parties tubulaires 28 et 30. L'organe support 48 assure le guidage du coin 32 lorsque celui-ci se déplace verticalement en considérant les figures 2 et 3 au moyen de deux trous 49 dans lesquels sont reçues en coulissement deux tiges 51 vissées dans le coin 32. Les filetages formés sur les tiges 51, ainsi que les taraudages avec lesquels ils coopèrent dans le coin 32, sont de préférence suffisamment longs pour permettre la remontée du coin en cas d'avarie de la vis 38. Le guidage horizontal des parties tubulaires 28 et 30, en considérant la figure 2, est réalisé au moyen de pions 50 reçus dans des ouvertures oblongues 52 formées dans l'organe support 48. L'extrémité de la tige filetée 38 opposée à celle portant la collerette 42 fait saillie vers l'extérieur par rapport à l'organe support 48 et comporte une tête de manœuvre 54 prévue pour recevoir un outil de manœuvre approprié (non représenté).

Afin de permettre le passage du fluide entre les extrémités 10 et 12 des canalisations, les brides 14 et 16 ainsi que les parties tubulaires 28 et 30 sont percées de passages sensiblement alignés et de même diamètre 56, 58, 60 et 62 respectivement. De même, le coin 32 est traversé par un passage 64 dont le diamètre est égal ou supérieur à ceux des passages 56, 58, 60 et 62, le passage 64 étant en alignement avec ces derniers lorsque les parties tubulaires 28 et 30 engagent de façon étanche les surfaces en vis-à-vis 24 et 26 formées sur les brides 14 et 16.

En outre, l'étanchéité du dispositif, notamment aux interfaces entre les brides et les organes tubulaires et entre ces derniers et le coin 32, est obtenue au moyen de joints toriques 66 et 68 logés dans des gorges annulaires formées dans la partie tubulaire 28 et 30 autour des passages 60 et 62 de façon à venir engager de façon étanche les faces 24 et 26 des brides 14 et 16 respectivement lors de la mise en place de l'organe tubulaire extensible 18. De même, des joints toriques 70 et 72 sont également montés dans des gorges formées dans les parties tubulaires 28 et 30 autour des passages 60 et 62 de façon à venir engager les faces opposées 74 et 76 du coin 32. Comme le montrent les figures 2 et 3, les joints 70 et 72 sont de préférence décalés par rapport à l'axe des canalisations de façon à ne pas être endommagés par le coin 32 lors du déplacement de celui-ci.

Comme le montre la figure 2, des entretoises 78 sont disposées entre les brides 14 et 16 de façon à assurer un parallélisme correct entre les faces 24 et 26 de ce dernier, ce qui permet d'obtenir une bonne étanchéité du dispositif. En outre, et comme le montre en particulier la figure 3, d'autres entretoises 79 définissent entre les faces en vis-à-vis 24 et 26 des brides 14 et 16, des moyens de guidage permettant de recevoir et de positionner l'organe tubulaire extensible 18 par rapport aux brides, ce qui assure un centrage correct de cet organe même lorsque la mise en place est effectuée en aveugle dans un emplacement non accessible.

Des chanfreins 80, 82, 84 et 86 sont de préférence formés respectivement sur les brides 14 et 16 et sur les parties tubulaires 28 et 30 afin de faciliter l'insertion de l'organe tubulaire extensible 18 entre les brides.

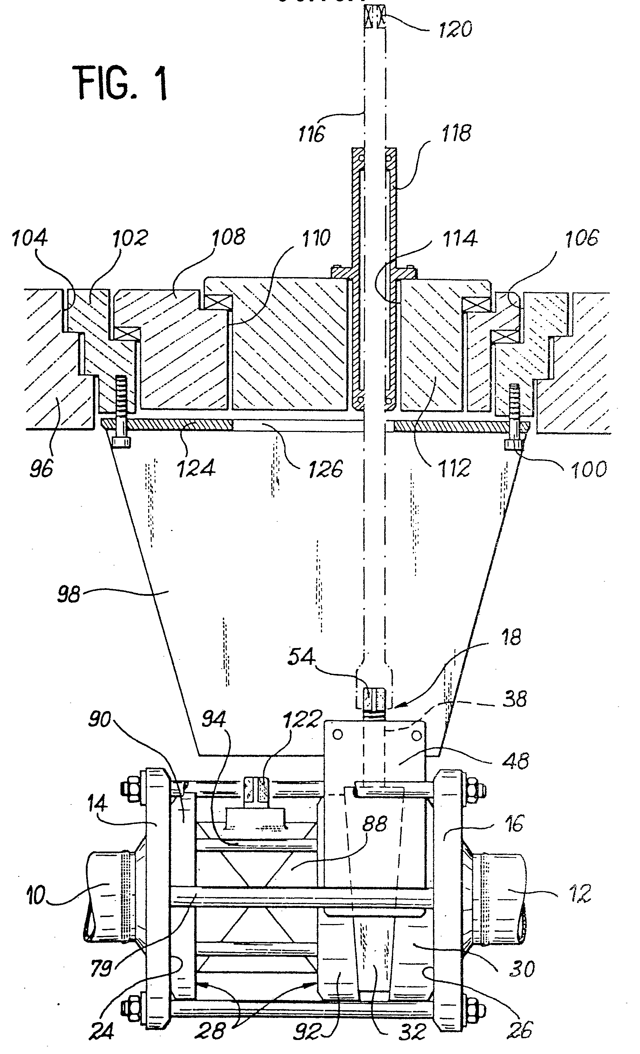

Selon l'invention, et comme le montre la figure 1, une vanne 88, d'un quelconque type connu, est insérée entre deux éléments 90 et 92 constituant la partie tubulaire 28. Les éléments 90 et 92 sont reliés au moyen d'entretoises 94 à l'aide desquelles la vanne 88 est serrée de façon étanche par l'intermédiaire de joints d'étanchéité annulaires (non représentés).

De plus, dans le mode de réalisation représenté sur la figure 1, les extrémités 10 et 12 des canalisations sont disposées derrière une paroi étanche 96. Une telle structure se rencontre, par exemple, lorsque la nature du fluide circulant dans les canalisations et/ou l'environnement dans lequel se trouvent les canalisations rendent nécessaire de protéger les utilisateurs à l'aide d'une enceinte, d'une cloison ou d'un plancher étanche. Dans ce cas, le dispositif selon l'invention comprend en outre une plaque support 98 fixée au moyen de vis 100, ou analogues, à un bouchon 102 dont la périphérie en gradin coopère de façon étanche avec une ouverture 104 formée dans la cloison 96. Comme le montre la figure 1, les vis 100 autorisent un certain débattement de la plaque 98 par rapport au bouchon 102 parallèlement à l'axe de la tige filetée 38, et la plaque support 98 est associée à l'organe support en forme d'étrier 48 de l'organe tubulaire extensible 18.

Afin de compenser un éventuel décalage existant par construction entre l'ouverture 104 formée dans la cloison et les extrémités 10 et 12 des canalisations, sans introduire de contraintes dans l'installation, le bouchon 102 comporte une ouverture 106 concentrique à l'ouverture 104 et dans laquelle est reçu un second bouchon 108, lui-même percé d'un trou 110 excentré par rapport à l'ouverture 110. Le trou 110 reçoit un troisième bouchon 112 dans lequel est également percé un trou 114 excentré par rapport au trou 110. Un organe de commande 116, représenté en traits mixtes sur la figure 1, traverse le trou excentré 114 par l'intermédiaire d'un manchon d'étanchéité 118 autorisant à la fois la rotation et la translation de l'organe de commande 116 par rapport au bouchon 112. L'organe de commande 116 s'adapte sur la tête de manœuvre 54 de la tige filetée 38 et il présente à son extrémité disposée à l'extérieur de la cloison 96 une tête de manœuvre 120 par laquelle il peut être sollicité en rotation soit directement si la forme de la tête 120 le permet, soit par l'intermédiaire d'un outil de commande approprié (non représenté) susceptible de coopérer avec sa tête 120 dans l'exemple représenté sur la figure 1.

La structure qui vient d'être décrite permet la commande à distance du coin 32 au travers de la cloison 96, ainsi que le démontage aisé de l'ensemble du dispositif selon l'invention malgré sa disposition derrière la cloison étanche 96. En effet, l'organe tubulaire extensible 18 et la vanne 88 montée dans cet organe sont associés au bouchon 102 par la plaque support 98 et l'organe support 48, et les dimensions de l'ouverture 104 permettent le passage de l'organe extensible 18 et de la vanne 88 après que le coin 32 ait été remonté en considérant la figure 1 à l'aide de l'organe de commande 116.

De plus, cette structure présente l'avantage de permettre une compensation des décalages relativement importants qui existent le plus souvent par construction entre les extrémités des canalisations et l'ouverture formée dans la paroi. En effet, la combinaison des deux bouchons 108 et 112 percés chacun d'un trou excentré 110 et 114 permet en faisant tourner chacun des deux bouchons de déplacer l'axe du trou 114 que traverse l'organe de commande 116 à l'intérieur d'une surface circulaire qui peut être déterminée par construction en fonction de la position des trous excentrés 110 et 114 et du diamètre des bouchons. Comme l'illustre la figure 1, il est également possible d'utiliser cette structure pour commander à l'aide d'un seul organe de commande 116 à la fois la tige filetée 38 contrôlant le déplacement du coin 32 et la tête de

manœuvre 122 de la vanne 88. Dans ce but, la tête de manœuvre 122 est identique à la tête de manœuvre 54 de la tige filetée 38, et une ouverture 126 est réalisée dans la partie 124 de la plaque support 98 par laquelle cette dernière est fixée au bouchon 102 pour permettre à l'organe de commande 116 de venir en alignement avec l'une ou l'autre des têtes de manœuvre 54 et 122 sans devoir être démonté. Il est ainsi possible d'éviter toute manœuvre intempestive de l'organe tubulaire extensible 18 pouvant avoir pour conséquence une fuite du fluide circulant dans les canalisations en disposant l'organe de manœuvre 116 en vis-à-vis de la tête de manœuvre 122 de la vanne 88 dès que l'organe tubulaire extensible 18 est mis en place. En outre, un tel montage permet de manœuvrer le coin 32 pour resserrer le dispositif en cas de fuite sans qu'il soit nécessaire d'interrompre la circulation du fluide dans les canalisations ni de supprimer l'étanchéité de la cloison étanche 96.

Le montage et le démontage du dispositif de raccordement représenté sur les figures 1 à 3 s'effectuent de la façon suivante :

Les brides 14 et 16 sont fixées à demeure sur les extrémités 10 et 12 des canalisations au moyen des soudures 20 et 22. Les entretoises 78 sont mises en place elles aussi de façon définitive afin d'assurer un parallélisme correct des faces 24 et 26 des brides et un alignement relativement précis des passages 56 et 58 formés dans les brides. On remarquera cependant que la mise en place des entretoises 78 n'a pas pour but de donner à la distance séparant les faces 24 et 26 une valeur bien précise, de telle sorte que les contraintes exercées par les entretoises 78 restent relativement limitées. Enfin, les entretoises 79 sont également montées à demeure pour définir avec les brides 14 et 16 un berceau assurant le positionnement de l'organe tubulaire extensible 18.

Avant le montage de l'organe tubulaire extensible 18 entre les brides 14 et 16, la tige filetée 38 est sollicitée en rotation par sa tête de manœuvre 54 dans le sens correspondant au déplacement du coin 32 vers le haut en considérant la figure 2 jusqu'à la position illustrée en traits mixtes sur cette figure. Dans cette position, par suite de la coopération des faces 74 et 76 avec les rampes inclinées 34 et 36, la distance séparant les faces opposées des parties tubulaires 28 et 30 est minimale. L'ensemble constitué par les bouchons 102, 108 et 112, l'organe de commande 116 reçu dans le manchon d'étanchéité 118, la plaque support 98 portée par le bouchon 102 et l'organe tubulaire extensible 18 incorporant la vanne 88 est alors introduit par l'ouverture 104 après que le coin 32 ait été remonté en considérant la figure 1 de façon à diminuer la longueur de l'organe tubulaire extensible 18. Ce montage est facilité par les chanfreins 80, 82, 84 et 86 formés respectivement sur les brides 14 et 16 et sur les parties tubulaires 28 et 30. Le positionnement de l'organe tubulaire extensible 18 s'effectue alors facilement grâce aux entretoises de guidage 79 disposées entre les brides, de sorte que les passages 56, 60, 62 et 58 sont automatiquement alignés. Par suite du débattement entre le bouchon 102 et la plaque 98 autorisé par les vis 100 parallèlement à l'axe de l'organe de commande 116, un éventuel décalage entre les valeurs théorique et réelle de la distance séparant les canalisations 110 de la cloison 96 peut être compensé. Lorsque le montage de l'organe extensible 18 est réalisé, on fait tourner les bouchons 108 et 112 jusqu'à ce que l'axe du trou 114 soit aligné avec celui de la tige filetée 38 commandant l'allongement de l'organe extensible 18. On emboîte alors l'organe de commande 116 sur la tête de manœuvre 54 et on le sollicite en rotation par sa tête 120 dans le sens correspondant à la descente du coin 32 entre les parties tubulaires 28 et 30 jusqu'à ce que l'élément tubulaire 90 engage de façon étanche la surface 24 et jusqu'à ce que la partie tubulaire 30 engage de façon étanche la surface 26. De préférence, l'organe de commande 116 est alors déboîté de la tête de manœuvre 54 et on fait tourner à nouveau les bouchons 108 et 112 jusqu'à ce que l'axe de l'organe de commande 116 vienne en alignement avec la tête de manœuvre 122 de la vanne 88. Les bouchons 108 et 112 peuvent être maintenus de façon rigide dans cette position par tout moyen approprié tel que, par exemple, par des vis ou des pions (non représentés). L'organe de manœuvre 116 est ensuite emboîté sur la tête de manœuvre 122 de la vanne 88 et l'ouverture et la fermeture de celle-ci peuvent être effectuées à tout moment en manœuvrant la tête 120 de l'organe de commande. Le démontage du dispositif selon l'invention s'effectue dans l'ordre inverse des opérations qui viennent d'être énoncées.

On observera que le dispositif qui vient d'être décrit permet un raccordement des canalisations sans faire subir à celles-ci de contraintes trop importantes, puisque la force exercée par l'organe extensible 18 sur les canalisations est indépendante de la distance séparant les surfaces en vis-à-vis 24 et 26 formées sur les brides 14 et 16. En outre, le montage et le démontage de l'organe tubulaire extensible 18 peuvent être effectués de façon particulièrement simple, même lorsque le dispositif de raccordement est disposé dans un endroit particulièrement peu accessible. En effet, l'organe tubulaire extensible 18 est monté et démonté à l'aide d'un outil de manœuvre dont l'axe est transversal par rapport à l'axe des canalisations. Ces opérations peuvent donc être effectuées au travers d'une ouverture ménagée dans une paroi ou dans une enceinte comme l'illustre la figure 1.

L'invention n'est pas limitée aux modes de réalisation qui viennent d'être décrits à titre d'exemple. En particulier, l'organe tubulaire extensible peut être commandé par des moyens d'écartement différents du coin 32. Ces moyens d'écartement peuvent comprendre, par exemple, des moyens mécaniques tels qu'un système à came tournant, mais ils peuvent également comprendre un système hydraulique ou pneumatique tel que, par exemple, un ensemble cylindre-piston ou tout autre système bien connu des spécialistes de la technique.

Comme l'enseigne la description qui précède, le dispositif selon l'invention permet de disposer entre deux canalisations une vanne d'un quelconque type connu. Cependant, on comprendra que ce dispositif peut également être utilisé pour effectuer le montage de tout autre appareil tel que, notamment, un appareil de mesure ou de commande.

Enfin, deux bouchons emboîtés l'un dans l'autre et percés d'un trou excentré peuvent être prévus à la fois en vis-à-vis de la tige filetée commandant le déplacement du coin et de la tête de manœuvre de la vanne, dans un troisième bouchon permettant le montage et le démontage de l'organe extensible au travers de l'ouverture formée dans la cloison. Il est alors nécessaire de prévoir deux organes de commande séparés pour le coin et pour la vanne.

## Revendications

1. Dispositif démontable prévu pour insérer un appareil (88) entre les extrémités en vis-à-vis de deux canalisations (10, 12) définissant un axe commun, comprenant deux brides (14, 16) susceptibles d'être fixées de façon étanche auxdites extrémités, ce dispositif étant caractérisé en ce qu'il comprend de plus un organe (18) extensible le long dudit axe et constituant un sous-ensemble unitaire supportant ledit appareil, ledit organe extensible étant normalement allongé entre les brides (14, 16) selon l'axe des canalisations, afin de venir en appui étanche contre ces brides et de permettre une communication entre lesdites canalisations au travers d'un passage (60, 62, 64) ménagé dans ledit organe extensible (18) le long de l'axe des canalisations, ledit organe extensible pouvant être rétracté selon l'axe des canalisations pour permettre le montage et le démontage de l'appareil porté par ledit sous-ensemble unitaire.

2. Dispositif selon la revendication 1, caractérisé en ce que l'organe extensible (18) comporte deux parties tubulaires (28, 30), mobiles selon l'axe des canalisations et dont l'une porte ledit appareil, un coin (32) mobile selon une direction transversale par rapport à l'axe des canalisations sous l'action de moyens de commande (38) et coopérant avec une rampe (34, 36) ménagée sur l'une au moins desdites parties tubulaires pour déplacer ces dernières selon l'axe des canalisations, et une pièce de liaison (48) supportant le coin par l'intermédiaire des moyens de commande et supportant les parties tubulaires par l'intermédiaire de moyens de support (50, 52) autorisant un déplacement desdites parties parallèlement à l'axe des canalisations.

3. Dispositif selon la revendication 2, caractérisé en ce que les moyens de commande sont constitués par une tige filetée vissée (38) dans la pièce de liaison (48) et dont une extrémité est associée en translation avec le coin (32).

4. Dispositif selon la revendication 3, caractérisé en ce que l'autre extrémité de la tige filetée (38) comporte une tête de manœuvre (54) sur laquelle s'adapte un organe de commande (116) traversant une ouverture (106) formée dans une paroi (96) par l'intermédiaire d'au moins deux bouchons (108, 112), un premier (108) desdits bouchons étant reçu de façon tournante dans ladite ouverture (106) alors que le second bouchon (112) est reçu de façon tournante dans un trou excentré (110) formé dans le premier bouchon et que l'organe de commande est reçu de façon tournante dans un trou excentré (114) formé dans le second bouchon.

5. Dispositif selon la revendication 4, caractérisé en ce que ladite ouverture (106) est formée dans un troisième bouchon (102) sur lequel est fixée la pièce de liaison (48), les dimensions de l'ouverture étant suffisantes pour permettre le passage de l'organe extensible.

6. Dispositif selon l'une quelconque des revendications 4 ou 5, caractérisé en ce que ledit appareil (88) est constitué par une vanne comprenant une tête de manœuvre (122) sur laquelle s'adapte l'organe de manœuvre (116) après rotation des premier et second bouchons (108, 112).

7. Dispositif selon l'une quelconque des revendications 2 à 6, caractérisé en ce que des joints d'étanchéité annulaires (68, 70, 72) sont disposés aux extrémités des parties tubulaires (28, 30) susceptibles de coopérer avec les brides (14, 16) et entre le coin (32) et lesdites parties tubulaires.

8. Dispositif selon l'une quelconque des revendications 2 à 7, caractérisé en ce que ledit appareil (88) est monté de façon étanche entre deux éléments (90, 92) constituant ladite partie tubulaire (28) au moyen d'entretoises (94) reliant lesdits éléments.

9. Dispositif selon l'une quelconque des revendications précédentes, caractérisé en ce que des entretoises (78) relient les brides (14, 16) de façon rigide.

10. Dispositif selon l'une quelconque des revendications précédentes, caractérisé en ce que des moyens de guidage (79) sont disposés entre les brides (14, 16) pour définir avec elles un berceau recevant l'organe extensible (18).

## Claims

1. Demountable apparatus provided for the positioning of a device (88) between the facing ends of two conduits (10, 12) having a common axis, comprising two flanges (14, 16) adapted to be fixed in fluid-tight manner to said ends, said apparatus being characterized in that it additionally comprises a member (18) extendible longitudinally of said axis and comprising a unitary sub-assembly supporting said device, said extendible member normally being extended between the flanges (14, 16) along the axis of the conduits whereby to abut in fluid-tight manner against said flanges and to permit communication between said conduits, through a passage (60, 62, 64) formed in said extendible member (18) longitudinally of the axis of the conduits, said extendible member being retractable axially of the conduits to allow the installation and removal of the device carried by said unitary sub-assembly.

2. Apparatus according to Claim 1, characterized in that the extendible member (18) comprises two tubular parts (28, 30) mobile axially of the conduits, one of which carries said device, a wedge (32) mobile in a transverse direction with respect to the axis of the conduits under the action of command means (38), and cooperating with an inclined plane (34, 36) formed on at least one of said tubular parts to displace the latter axially of the conduits, and a link member (48) supporting the wedge by means of the command means, and supporting the tubular parts through support means (50, 52) permitting displacement of said parts parallel to the axis of the conduits.

3. Apparatus according to Claim 2, characterized in that the command means comprise a threaded rod (38), screwed into the link member (48), and one of whose ends is movably associated with the wedge (32).

4. Apparatus according to Claim 3, characterized in that the other end of the threaded rod (38) comprises a control head adapted to engage a control device (116) passing through an opening (106), formed in a partition (96), by way of at least two plugs (108, 112), a first plug (108) of said plugs being rotatably receivable in said opening (106) while the second plug (112) is rotatably receivable in an excentric hole (110) formed in the first plug, and in that the control device is rotatably received in an excentric hole (114) formed in the second plug.

5. Apparatus according to Claim 4, characterized in that said opening (106) is formed in a third plug (102) on which is fixed said link member (48), the dimensions of the opening being sufficient to permit passage of the extendible member.

6. Apparatus according to either of Claims 4 and 5, characterized in that said device (88) is a valve comprising a control head (122) adapted to engage the control device (116) after rotation of the first and second plugs (108, 112).

7. Apparatus according to any one of Claims 2 to 6, characterized in that annular gaskets (68, 70, 72) are located at the end of the tubular parts (28, 30) adapted to cooperate with the flanges (14, 16), and between the wedge (32) and the said tubular parts.

8. Apparatus according to any one of Claims 2 to 7, characterized in that said device (88) is mounted in fluid-tight manner between two members (90, 92) constituting said tubular part (28), by means of spacers (94) connecting said members.

9. Apparatus according to any one of the preceding Claims characterized in that spacers (78) rigidly connect the flanges (14, 16).

10. Apparatus according to any one of the preceding Claims, characterized in that guide means (79) are located between the flanges (14, 16), defining with them a cradle adapted to receive the extendible member (18).

## Ansprüche

1. Demontierbare Vorrichtung zum Einsetzen eines Geräts (88) zwischen die einander gegenüberstehenden Enden zweier in einer gemeinsamen Achse angeordneten Rohre (10, 12), mit zwei abdichtend an den genannten Enden befestigbaren Bundringen (14, 16) gekennzeichnet durch einen entlang der genannten Achse verlängerbaren, eine das genannte Gerät tragende Unterbaugruppe darstellenden Einbausatz (18), welcher im Normalzustand in Richtung der Achse der beiden Rohre verlängert zwischen den beiden Bundringen (14, 16) angeordnet ist und sich in abdichtender Anlage an den beiden Bundringen befindet, so daß über einen in dem entlang der Achse der Rohre verlängerbaren Einbausatz (18) gebildeten Durchlaß (60, 62, 64) eine Strömungsverbindung zwischen den beiden Rohren vorhanden ist, und welcher für den Einbau und den Ausbau des von der Unterbaugruppe getragenen Geräts in Richtung der Achse der Rohre verkürzbar ist.

2. Vorrichtung nach Anspruch 1, dadurch gekennzeichnet, daß der verlängerbare Einbausatz (18) zwei entlang der Achse der Rohre bewegbare rohrförmige Teile (28, 30), von denen eines das genannte Gerät trägt, einen unter Einwirkung einer Betätigungseinrichtung (38) in einer quer zur Achse der Rohre verlaufenden Richtung bewegbaren und zum Verschieben der rohrförmigen Teile entlang der Achse der Rohre mit einer an wenigstens einem der rohrförmigen Teile gebildeten Schrägflanke (34, 36) zusammenwirkenden Keil (32) und ein den Keil im Zusammenwirken mit den Betätigungseinrichtungen tragendes Verbindungsstück (48) aufweist, welches die rohrförmigen Teile im Zusammenwirken mit eine Verschiebung derselben parallel zur Achse der Rohre zulassenden Trageinrichtungen (50, 52) trägt.

3. Vorrichtung nach Anspruch 2, dadurch gekennzeichnet, daß die Betätigungseinrichtungen eine in das Verbindungsstück (48) eingeschraubte Gewindestange (38) aufweisen, welche an einem Ende bewegungsübertragend mit dem Keil (32) verbunden ist.

4. Vorrichtung nach Anspruch 3, dadurch gekennzeichnet, daß das andere Ende der Gewindestange (38) einen Bedienungskopf (54) aufweist, auf welchen ein unter Zwischenschaltung wenigstens zweier Deckel (108, 112) eine in einer Wand (96) gebildete Öffnung (106) durchsetzendes Betätigungselement (116) aufsetzbar ist, wobei ein erster (108) der genannten Deckel drehbar in die Öffnung (106) eingesetzt ist, während der zweite Deckel (112) drehbar in eine im ersten Deckel geformte exzentrische Öffnung (110) eingesetzt ist und das Betätigungselement drehbar in einer im zweiten Deckel geformten exzentrischen Öffnung (114) gehalten ist.

5. Vorrichtung nach Anspruch 4, dadurch gekennzeichnet, daß die genannte Öffnung (106) in einem dritten Deckel (102) geformt ist, an welchem das Verbindungsstück (48) befestigt ist, wobei die Abmessungen der Öffnung ausreichend für den Durchtritt des verlängerbaren Einbausatzes sind.

6. Vorrichtung nach Anspruch 4 oder 5, dadurch gekennzeichnet, daß das Gerät ein Absperrorgan (88) ist und einen Bedienungskopf (122) aufweist, auf welchen das Betätigungselement (116) nach Verdrehung des ersten und des zweiten Deckels (108, 112) aufsetzbar ist.

7. Vorrichtung nach einem der Ansprüche 2 bis 6, dadurch gekennzeichnet, daß ringförmige Dichtungen (68, 70, 72) an den mit den Bundringen (14, 16) zusammenwirkenden Enden der rohrförmigen Teile (28, 30) sowie zwischen dem Keil (32) und den rohrförmigen Teilen angeordnet sind.

8. Vorrichtung nach einem der Ansprüche 2 bis 6, dadurch gekennzeichnet, daß das Gerät (88) mittels zwei das eine rohrförmige Teil (28) darstellende Elemente (90, 92) miteinander verbindender Einspannglieder (94) abdichtend zwischen den beiden Elementen befestigt ist.

9. Vorrichtung nach einem der vorstehenden Ansprüche, dadurch gekennzeichnet, daß die Bundringe (14, 16) mittels Einspanngliedern (78) starr miteinander verbunden sind.

10. Vorrichtung nach einem der vorstehenden Ansprüche, dadurch gekennzeichnet, daß zwischen den Bundringen (14, 16) Führungseinrichtungen (79) angeordnet sind, welche zusammen mit diesen eine Wiege für die Aufnahme des verlängerbaren Einbausatzes (18) bilden.

FIG. 1

0 014 614

FIG. 2

FIG. 3